# DEMANDE DE BREVET EUROPEEN

(11) **EP 2 314 967 A1**
(43) Date de publication de la demande: **27.04.2011**
(21) Numéro de dépôt: 10187739.7
(22) Date de dépôt: 15.10.2010
(51) Int. Cl.: F28D 1/04, B60H 1/00

(54) **Echangeur de chaleur comprenant un collecteur d'entrée, un collecteur de sortie et un collecteur secondaire**

(30) Priorité: 19.10.2009 FR 0904994
(71) Demandeur: Valeo Systèmes Thermiques, 78321 Le Mesnil Saint Denis (FR)
(72) Inventeur: El Chammas, Rody, 78321 Le Mesnil Saint Denis (FR)

(57) **Abrégé**

L'invention concerne un échangeur de chaleur (1) comprenant un collecteur d'entrée de fluide (5), un collecteur de sortie de fluide (9) et un faisceau principal (100) comprenant une pluralité de canaux (6) destinés à faire circuler un fluide (F), le faisceau principal (100) étant interposé entre le collecteur d'entrée de fluide (5) et le collecteur de sortie de fluide (9), **caractérisé en ce que** l'échangeur de chaleur (1) comprend un faisceau secondaire (200) comprenant une pluralité de canaux (6') destinés à faire circuler le fluide (F), le faisceau secondaire (200) étant interposé entre le collecteur d'entrée de fluide (5) et un collecteur secondaire (11).

## Description

### Domaine technique de l'invention.

L'invention est du domaine des installations de ventilation, de chauffage et/ou de climatisation d'un véhicule automobile. Elle a pour objet un échangeur de chaleur pour installation de ventilation, chauffage et/ou climatisation.

### Etat de la technique.

Un véhicule automobile est couramment équipé d'une installation de ventilation, de chauffage et/ou de climatisation pour modifier les paramètres aérothermiques de l'air contenu à l'intérieur de l'habitacle du véhicule. L'installation est principalement constituée d'un boîtier qui est réalisé en matière plastique et qui est disposé sous la planche de bord du véhicule. Le boîtier comprend au moins une bouche d'admission d'air et au moins une bouche d'évacuation d'air hors du boîtier vers l'habitacle. Le boîtier est destiné à canaliser la circulation d'un flux d'air entre ladite bouche d'admission d'air et ladite bouche d'évacuation d'air.

Un flux d'air entrant est admis à l'intérieur du boîtier par l'intermédiaire de la bouche d'admission d'air. Le flux d'air entrant est indifféremment un flux d'air entrant extérieur prélevé à l'extérieur du véhicule, ou un flux d'air entrant de recyclage prélevé à l'intérieur de l'habitacle.

Selon diverses variantes, le boîtier est agencé pour délivrer un flux d'air sortant ou plusieurs flux d'air sortants vers respectivement une zone ou plusieurs zones de l'habitacle. Par exemple, une installation « deux-zones » est à même d'aérer différemment une zone avant et une zone arrière de l'habitacle par l'intermédiaire de la délivrance d'un flux d'air sortant avant et d'un flux d'air sortant arrière. Par exemple encore, une installation « quatre zones » est agencée pour aérer différemment une zone avant gauche, une zone avant droite, une zone arrière gauche et une zone arrière droite de l'habitacle par l'intermédiaire de la délivrance respective d'un flux d'air sortant avant gauche, d'un flux d'air sortant avant droit, d'un flux d'air sortant arrière gauche et d'un flux d'air sortant arrière droit. Chacun des flux d'air sortants est délivré hors du boîtier par l'intermédiaire d'une bouche d'évacuation d'air correspondante. Chaque bouche d'évacuation d'air est équipée d'un volet de distribution d'air qui est manoeuvrable entre une position d'ouverture dans laquelle le volet autorise une délivrance du flux d'air sortant correspondant et une position de fermeture dans laquelle le volet interdit une telle délivrance.

Le boîtier loge au moins un échangeur de chaleur pour modifier la température du flux d'air entrant et fournir un flux d'air thermiquement traité. Ce dernier est ensuite divisé en autant de flux d'air sortants que de zones de l'habitacle à aérer, notamment par l'intermédiaire de cloisons que le boîtier comporte. La modification de la température du flux d'air entrant est obtenue à partir d'une traversée de l'échangeur de chaleur par le flux d'air entrant.

L'échangeur de chaleur est par exemple un radiateur installé sur un circuit de refroidissement du moteur du véhicule à l'intérieur duquel circule un fluide caloporteur. Le radiateur à même de réchauffer le flux d'air entrant. L'échangeur de chaleur est par exemple encore un évaporateur installé sur une boucle de climatisation à l'intérieur de laquelle circule un fluide réfrigérant. L'évaporateur est apte à refroidir le flux d'air entrant.

L'échangeur de chaleur comprend un collecteur d'entrée et un collecteur de sortie qui sont reliés l'un à l'autre par une pluralité de canaux parallèles les uns aux autres. Selon la conformation des canaux, l'échangeur de chaleur est soit un échangeur de chaleur permettant une circulation du fluide « en I », soit un échangeur de chaleur permettant une circulation du fluide « en U ». Dans le premier cas, le collecteur d'entrée du fluide et le collecteur de sortie du fluide sont séparés l'un de l'autre par des canaux parallèles rectilignes qui sont agencés « en I ». Dans le deuxième cas, le collecteur d'entrée du fluide et le collecteur de sortie du fluide sont contigus l'un avec l'autre et sont reliés l'un à l'autre par des canaux parallèles courbes qui sont agencés « en U ».

Dans les deux cas précités, on définit une face frontale de l'échangeur de chaleur, comme étant parallèle à un plan d'extension générale de l'échangeur de chaleur et comme étant orthogonale à une direction d'écoulement du flux d'air entrant à travers l'échangeur de chaleur. En d'autres termes, la face frontale de l'échangeur de chaleur est celle par laquelle le flux d'air entrant traverse l'échangeur de chaleur. La face frontale est divisée en autant de faces frontales élémentaires que de zones de l'habitacle à aérer. Selon l'agencement de l'installation, et plus particulièrement selon l'agencement des cloisons de l'installation, chaque face frontale élémentaire est dédiée à la modification du flux d'air sortant correspondant.

Ainsi, un échangeur de chaleur logé à l'intérieur d'une installation « deux zones » présente une face frontale comportant deux faces frontales élémentaires, dont une face frontale avant destinée à modifier la température du flux d'air sortant avant et une face frontale arrière destinée à modifier la température du flux d'air sortant arrière.

De même, un échangeur de chaleur logé à l'intérieur d'une installation « quatre zones » présente une face frontale comportant quatre faces frontales élémentaires, dont une face frontale avant gauche (50) destinée à modifier la température du flux d'air sortant avant gauche, une face frontale avant droite (51) destinée à modifier la température du flux d'air sortant avant droit, une face frontale arrière gauche (52) destinée à modifier la température du flux d'air sortant arrière gauche et une face frontale arrière droite (53) destinée à modifier la température du flux d'air sortant arrière droit.

Un problème général posé dans le domaine réside dans le fait qu'une manoeuvre à l'ouverture du volet de distribution de la bouche d'évacuation d'air affecté à une zone spécifique de l'habitacle provoque une modification de l'échange de chaleur entre le fluide et le flux d'air entrant, ce qui provoque une modification de la température des flux d'air sortants affectés aux zones de l'habitacle dont les volets de distribution d'air sont maintenus en position d'ouverture. Il en découle une modification du confort thermique procuré à un utilisateur installé à l'intérieur d'une zone de l'habitacle, cette modification étant provoquée non pas par une modification de l'ouverture/fermeture du volet équipant la bouche d'évacuation d'air affectée à la zone à l'intérieur de laquelle est placé l'utilisateur, mais par la modification de l'ouverture/fermeture d'un volet équipant une autre zone que celle à l'intérieur de laquelle est placé l'utilisateur.

Plus précisément, pour une installation de ventilation, chauffage et/ou climatisation 4 zones comprenant un radiateur avec un configuration en I de la circulation du fluide, l'homogénéité de température du fluide entre les faces frontales élémentaires gauche (50, 52) et droite (51, 53) est satisfaisante (figure a). Néanmoins, l'homogénéité entre les faces frontales élémentaires avant (50, 51) et arrière (52, 53) n'est pas optimale, en considérant que les faces frontales élémentaires (50, 51, 52, 53) ont une surface équivalente. En effet, lorsque le flux d'air traverse la face frontale élémentaire arrière droite (53), il échange thermiquement avec le fluide et ainsi refroidit le fluide. En conséquence, lorsque la face frontale élémentaire avant droite (51) est traversée par le flux d'air, le fluide est à une température moins élevée que celle de la face frontale élémentaire arrière droite (53). Du coup, le flux d'air échangeant thermiquement avec le fluide au niveau de la face frontale avant droite (51) présente une température en sortie du radiateur moins élevée que celle du flux d'air sortant du radiateur via la face frontale élémentaire arrière droite (53).

Egalement, pour une installation de ventilation, chauffage et/ou climatisation 4 zones comprenant un radiateur avec un configuration en U de la circulation du fluide, l'homogénéité de température du fluide entre les faces frontales élémentaires avant (50, 51) et arrière (52, 53) est satisfaisante (figure b). Néanmoins, l'homogénéité entre les faces frontales élémentaires droite (51, 53) et gauche (50, 52) n'est pas optimale, en considérant que les faces frontales élémentaires (50, 51, 52, 53) ont une surface équivalente. En effet, lorsque le flux d'air traverse la face frontale élémentaire arrière gauche (52), il échange thermiquement avec le fluide et ainsi refroidit le fluide. En conséquence, lorsque la face frontale élémentaire arrière droite (53) est traversée par le flux d'air, le fluide est à une température moins élevée que celle de la face frontale élémentaire arrière gauche (52). Du coup, le flux d'air échangeant thermiquement avec le fluide au niveau de la face frontale arrière droite (53) présente une température en sortie du radiateur moins élevée que celle du flux d'air sortant du radiateur via la face frontale élémentaire arrière gauche (52).

Pour palier à cela, il est connu de modifier la surface des faces frontales élémentaires. En localisant les cloisons de l'installation délimitant chaque face frontale élémentaire, on rend plus homogène la température des flux d'air sortants du radiateur. Cependant, cette solution n'est pas satisfaisante car elle nécessite de lourdes adaptations de l'installation de ventilation, chauffage et/ou climatisation pour pouvoir installer les cloisons délimitantes de sorte à obtenir l'homogénéité de température recherchée. En outre, cette solution présente un coût élevé en terme de production et de développement.

### Objet de l'invention.

Le but de la présente invention est de proposer un échangeur de chaleur qui assure une homogénéité de température du flux d'air sortant quelque soit le nombre de zones de l'habitacle à traiter, et ceci à faible coût et de manière simple.

Pour cela, la présente invention concerne un échangeur de chaleur comprenant un collecteur d'entrée de fluide, un collecteur de sortie de fluide et un faisceau principal comprenant une pluralité de canaux destinés à faire circuler un fluide, le faisceau principal étant interposé entre le collecteur d'entrée et le collecteur de sortie. L'échangeur de chaleur comprend un faisceau secondaire comprenant une pluralité de canaux destinés à faire circuler le fluide, le faisceau secondaire étant interposé entre le collecteur d'entrée de fluide et un collecteur secondaire.

Avantageusement, le collecteur de sortie est relié au collecteur d'entrée de fluide et au collecteur secondaire par un collecteur intermédiaire.

Avantageusement, le collecteur intermédiaire est disposé sur une face latérale de l'échangeur de chaleur.

Avantageusement, le faisceau principal et le faisceau secondaire se situent de part et d'autre du collecteur d'entrée de fluide.

Avantageusement, les canaux du faisceau principal sont disposés perpendiculairement au collecteur d'entrée de fluide et au collecteur de sortie de fluide.

Avantageusement, les canaux du faisceau secondaire sont disposés perpendiculairement au collecteur d'entrée de fluide et au collecteur secondaire.

Avantageusement, une entrée est localisée à une extrémité latérale du collecteur d'entrée de fluide.

Avantageusement, l'entrée est localisée sur une face latérale de l'échangeur de chaleur.

Avantageusement, une sortie est localisée à une extrémité latérale du collecteur de sortie de fluide.

Avantageusement, la sortie est localisée sur une extrémité latérale de l'échangeur de chaleur.

Avantageusement, la circulation du fluide à l'intérieur du faisceau principal et à l'intérieur du faisceau secondaire se fait en I.

### Description des figures.

La présente invention sera mieux comprise à la lecture de la description qui va en être faite d'exemples de réalisation, en relation avec les figures des planches annexées, dans lesquelles :
Les figures a et b sont des vues schématiques d'échangeur de chaleur selon l'art antérieur.
Les fig.1 et fig.2 sont des vues schématique de variantes de réalisation d'un système de ventilation, de chauffage et/ou de climatisation selon la présente invention.
Les fig.3 et fig.4 sont des vues schématiques d'un tube plat selon la présente invention.
La fig.5 est une vue schématique d'une plaque selon la présente invention.

Un véhicule automobile est couramment équipé d'une installation de ventilation, de chauffage et/ou de climatisation pour modifier les paramètres aérothermiques de l'air contenu à l'intérieur de l'habitacle du véhicule. L'installation est principalement constituée d'un boîtier qui est réalisé en matière plastique et qui canalise la circulation d'un flux d'air. Le boîtier est susceptible de comprendre au moins une cloison pour séparer des flux d'air qui sont destinés à ventiler des zones respectives de l'habitacle.

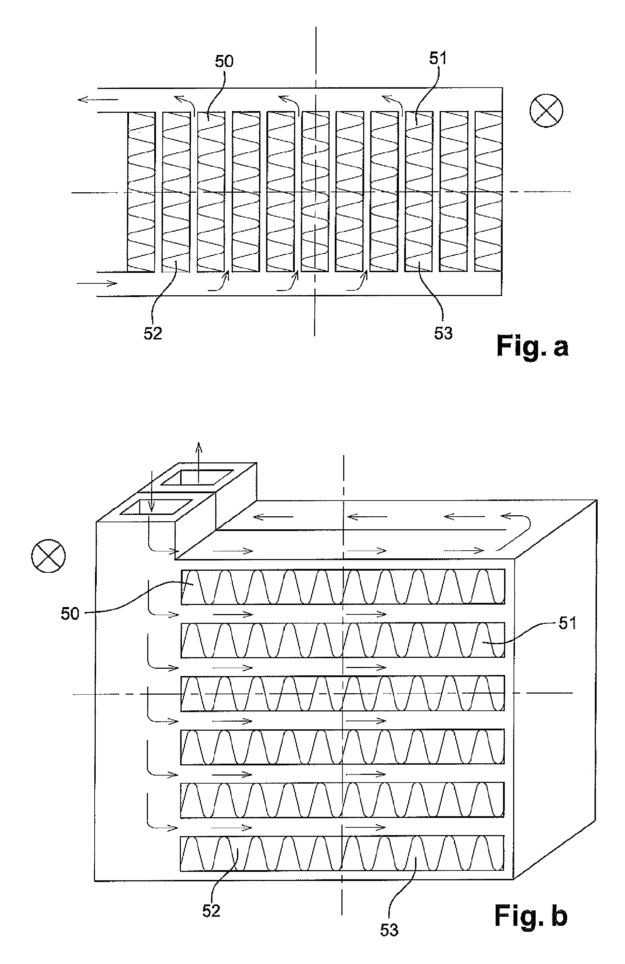

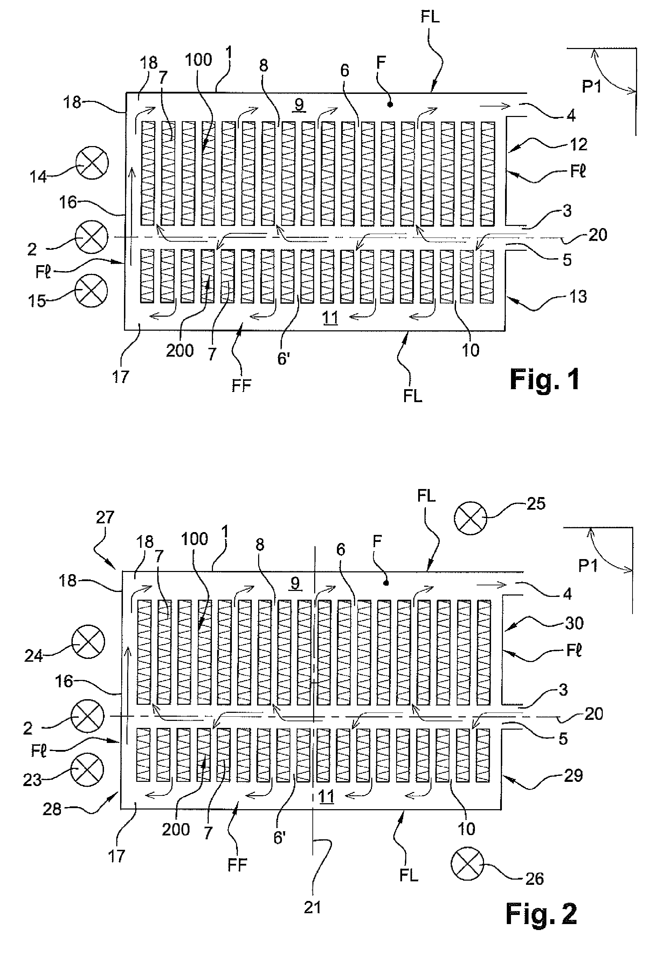

Sur la fig.1, est représenté un échangeur de chaleur 1 selon la présente invention à l'intérieur duquel circule un fluide F. L'échangeur de chaleur 1 est destiné à être logé à l'intérieur de l'installation de ventilation, de chauffage et/ou de climatisation pour modifier la température d'un flux d'air 2. A cet effet, ce dernier circule à l'intérieur de l'installation et traverse l'échangeur de chaleur 1. L'échangeur de chaleur 1 s'étend selon un plan d'extension générale P1 qui est parallèle au plan de la fig.1 et qui est orthogonal au flux d'air 2. L'échangeur de chaleur comprend une face frontale FF s'étendant dans le plan P1 et par laquelle le flux d'air 2 traverse l'échangeur de chaleur 1. Cette face frontale est opposée à une face terminale non représentée par laquelle le flux d'air 2 sort de l'échangeur de chaleur. Deux faces latérales FI, perpendiculaires à la face frontale FF, et deux faces longitudinales FL, perpendiculaires à la face frontale FF forment les extrémités de l'échangeur de chaleur 1.

L'échangeur de chaleur 1 est par exemple un radiateur qui est installé sur un circuit de refroidissement d'un moteur d'un véhicule et qui est prévu pour réchauffer le flux d'air 2. Le fluide F est un fluide caloporteur, tel que par exemple un mélange d'eau et de glycol.

L'échangeur de chaleur 1 est par exemple encore un évaporateur qui est installé sur une boucle de climatisation et qui est apte à refroidir le flux d'air 2. Le fluide F est un fluide réfrigérant, tel que par exemple du dioxyde de carbone connu sous la dénomination R744.

L'échangeur de chaleur 1 est pourvu d'une entrée de fluide 3 à travers laquelle le fluide F pénètre à l'intérieur de l'échangeur de chaleur 1 et d'une sortie de fluide 4 à travers laquelle le fluide F quitte l'échangeur de chaleur 1. L'entrée de fluide 3 et la sortie de fluide 4 sont ménagées sur une même face latérale FI de l'échangeur de chaleur 1. L'entrée de fluide 3 est en relation fluidique avec un collecteur d'entrée de fluide 5 de part et d'autre duquel s'étendent des canaux 6,6'. Le fluide F présent à l'intérieur du collecteur d'entrée de fluide 5 est susceptible de pénétrer à l'intérieur soit de canaux principaux 6, soit de canaux secondaires 6' qui sont opposés les uns aux autres et qui sont symétriquement ménagés par rapport au collecteur d'entrée 5. Les canaux principaux 6 sont rectilignes et parallèles entre eux pour assurer une circulation du fluide en I. Les canaux secondaires 6' sont également rectilignes et parallèles entre eux. L'échangeur de chaleur 1 est agencé en double-peigne dont les canaux principaux 6 forment une première rangée de dents tandis que les canaux secondaires 6' forment une deuxième rangée de dents, le collecteur d'entrée 5 constituant un manche commun aux deux rangées. Des intercalaires 7 sont disposés à la fois entre deux canaux principaux adjacents 6 et entre deux canaux secondaires adjacents 6', pour faciliter un échange de chaleur entre le fluide F et le flux d'air 2. Les canaux principaux 6 forment alors un faisceau principal 100. Les canaux secondaires 6' forment un faisceau secondaire 200. Les faisceaux principal 100 et secondaire 200 comprennent des intercalaires 7.

L'extrémité supérieure 8 de chacun des canaux supérieurs 6 est en relation fluidique avec un collecteur de sortie de fluide 9. Ce dernier est ménagé parallèlement au collecteur d'entrée de fluide 5. Autrement dit, le faisceau principal 100 est interposé entre le collecteur d'entrée de fluide 5 et le collecteur de sortie de fluide 9.

L'extrémité inférieure 10 de chacun des canaux secondaires 6' est en relation fluidique avec un collecteur secondaire 11. Ce dernier est ménagé parallèlement au collecteur d'entrée de fluide 5. Autrement dit, le faisceau secondaire 200 est interposé entre le collecteur d'entrée 5 et le collecteur secondaire 11.

Ces dispositions sont telles que l'échangeur de chaleur 1 de la présente invention est agencé en double « I ». En effet, l'échangeur de chaleur 1 comporte finalement un échangeur principal 12 et un échangeur secondaire 13. L'échangeur principal 12 est formé du collecteur d'entrée de fluide 5, des canaux principaux 6 et du collecteur de sortie de fluide 9 tandis que l'échangeur de chaleur élémentaire secondaire 13 est formé du collecteur d'entrée de fluide 5, des canaux secondaires 6' et du collecteur secondaire 11. L'échangeur principal 12 et l'échangeur secondaire 13 sont chacun agencé en « I ».

Le collecteur de sortie de fluide 9 et le collecteur secondaire 11 sont en relation fluidique l'un avec l'autre par l'intermédiaire d'un collecteur intermédiaire 16. Ce dernier relie plus particulièrement une évacuation 17 de fluide F que comporte le collecteur secondaire 11 à une admission 18 de fluide F que comporte le collecteur de sortie de fluide 9. Le collecteur intermédiaire 16 est plus particulièrement ménagé sur une face latérale FI de l'échangeur de chaleur 1 qui est opposé à la face latérale FI comportant l'entrée de fluide 3. Ainsi le collecteur de sortie de fluide 9, le collecteur intermédiaire 16 et le collecteur secondaire 11 forment conjointement une canalisation 9,16,11 qui est agencé en « U » et qui enserre les intercalaires 7, les canaux principaux 6, les canaux secondaires 6' et le collecteur d'entrée de fluide 5. Aussi, en sortie des canaux secondaires 6', le fluide F s'écoule à l'intérieur du collecteur secondaire 11 puis circule ensuite à l'intérieur du collecteur intermédiaire 16 et circule enfin à l'intérieur du collecteur de sortie de fluide 9. Le fluide F ayant circulé à l'intérieur des canaux principaux 6 vient se mélanger au fluide F en provenance du collecteur intermédiaire 16. Il en ressort finalement que l'échangeur principal 12 et l'échangeur secondaire 13 canalisent indépendamment l'un de l'autre la circulation du fluide F, le mélange du fluide F ayant parcouru séparément l'échangeur principal 12 et l'échangeur secondaire 13 s'effectuant à l'intérieur du collecteur de sortie de fluide 9.

L'échangeur principal 12 et l'échangeur secondaire 13 sont susceptibles d'échanger de la chaleur avec des flux d'air élémentaires respectifs 14,15 qui sont issus du flux d'air 2 mais qui sont affectés à la ventilation d'une zone spécifique respective de l'habitacle. Ainsi, un flux d'air principal 14 qui traverse l'échangeur principal 12 est par exemple destiné à ventiler une zone arrière du véhicule tandis qu'un flux d'air secondaire 15 qui traverse l'échangeur secondaire 13 est par exemple destiné à ventiler une zone avant du véhicule. Ces affectations respectives sont par exemple obtenues par l'intermédiaire d'une première cloison 20 de l'installation de ventilation, de chauffage et/ou de climatisation qui est ménagé à l'aplomb du collecteur d'entrée de fluide 5 et perpendiculairement au plan d'extension générale P1, pour séparer et isoler l'un de l'autre les flux d'air élémentaires 14,15. L'échangeur de chaleur 1 et la première cloison 20 de ladite installation forment conjointement un système de ventilation, de chauffage et/ou de climatisation non représenté apte à aérer indépendamment deux zones de l'habitacle.

Sur la fig.2, le système de ventilation, de chauffage et/ou de climatisation non représenté comprend une deuxième cloison 21 qui est perpendiculaire au plan d'extension générale P1 et à la première cloison 20. La première cloison 20 et la deuxième cloison 21 sont à même de séparer et d'isoler l'un de l'autre quatre flux d'air élémentaires 23, 24, 25, 26 qui sont issus du flux d'air 2 et qui sont respectivement destinés à ventiler une zone avant gauche, une zone arrière gauche, une zone arrière droite et une zone avant droite de l'habitacle du véhicule. La première cloison 20 et la deuxième cloison 21 délimitent finalement quatre faces frontales élémentaires 27, 28, 29, 30 de l'échangeur de chaleur 1 qui échangent de la chaleur indépendamment avec les quatre flux d'air élémentaires 23, 24, 25, 26 pour ventiler quatre zones distinctes de l'habitacle, sans qu'une modification de la ventilation d'une zone spécifique n'affecte la ventilation des autres zones. Autrement dit, l'éventuel manoeuvre à l'ouverture ou à la fermeture d'un volet de distribution d'un flux d'air secondaire 23, 24, 25, 26 ne perturbe en rien l'aération des autres zones par les autres flux d'air secondaires 23, 24, 25, 26.

Un tel agencement de l'échangeur de chaleur 1 et/ou du système de ventilation, de chauffage et/ou de climatisation permet que la température du fluide F pénétrant à l'intérieur de chacune des quatre faces frontales élémentaires 27, 28, 29, 30 de l'échangeur de chaleur 1 soit identique. Il en résulte une possibilité d'aérer de manière homogène quatre zones distinctes de l'habitacle, A partir de positionnements différents de la première cloison 20, du collecteur d'entrée 5 et de la deuxième cloison 21, il est néanmoins possible de privilégier les échanges thermiques entre une ou plusieurs faces frontales élémentaires 27, 28, 29, 30 de l'échangeur de chaleur 1 et un ou plusieurs flux d'air élémentaires 23, 24, 25, 26. De même, à partir de débits de fluide F distincts à l'intérieur d'une ou de plusieurs faces frontales élémentaires 27, 28, 29, 30 de l'échangeur de chaleur 1, il est aussi possible de privilégier les échanges thermiques entre une ou plusieurs faces frontales élémentaires 27, 28, 29, 30 de l'échangeur de chaleur 1 et un ou plusieurs flux d'air élémentaires 23, 24, 25, 26.

Un tel agencement de l'échangeur de chaleur 1 et/ou du système de ventilation, de chauffage et/ou de climatisation permet aussi des échanges de chaleur indépendants entre les flux d'air élémentaires 23, 24, 25, 26 et le fluide F circulant à l'intérieur de chacune desdites faces frontales élémentaires 27, 28, 29, 30. Il en résulte une possibilité d'aérer de manière indépendante quatre zones distinctes de l'habitacle.

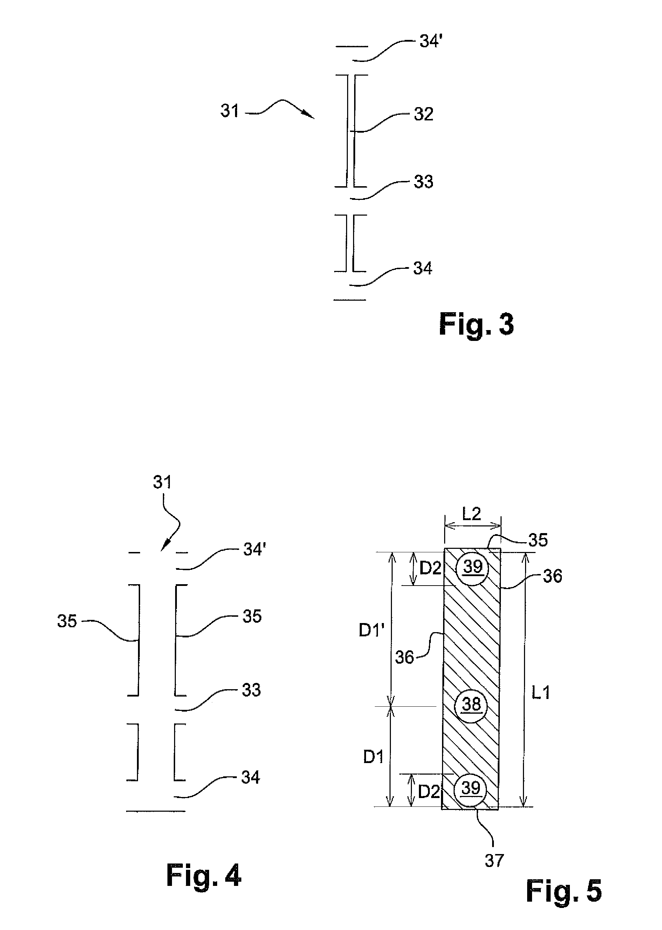

L'échangeur de chaleur 1 de la présente invention est notamment obtenu à partir de l'empilement les uns sur les autres de tubes plats 31 tels que celui représenté sur la fig.3. Chaque tube plat 31 délimite un volume interne 32 qui est en relation avec l'extérieur du tube plat 31 par l'intermédiaire d'un passage d'entrée 33, d'un passage de sortie secondaire 34 et d'un passage de sortie 34'. Le passage d'entrée 33 est interposé entre le passage de sortie secondaire 34 et le passage de sortie 34'. L'assemblage entre eux de passages d'entrée 33 de tubes plats 31 constituent le collecteur d'entrée 5. De même, l'assemblage entre eux de passages de sorties secondaire 34 de tubes plats 31 constituent le collecteur secondaire 11. De même encore, l'assemblage entre eux de passages de sorties 34' de tubes plats 31 constituent le collecteur de sortie 9. Lesdits assemblages sont notamment réalisés par brasage.

Sur la fig.4, chaque tube plat 31 est formé à partir de l'assemblage, notamment par brasage, de deux plaques 35 entre elles. Les plaques 35 sont de préférence globalement rectangulaires.

Sur la fig.5, chaque plaque 35 comporte deux grands côtés 36 qui sont d'une longueur L1 et qui s'étendent entre deux petits cotés 37 qui sont d'une longueur L2. La longueur L1 est supérieure à la longueur L2. La plaque est pourvue d'un orifice d'entrée 38, d'un orifice de sortie inférieur 39 et d'un orifice de sortie supérieur 39'. L'orifice d'entrée 38 est ménagé à une distance D1 de l'un des petits cotés 37 et à une distance D1' de l'autre des petits côtés 37. Les distances D1 et D1' sont chacune comprises entre un quart et trois-quarts de la longueur L1.

Par ailleurs, l'orifice de sortie inférieur 39 et l'orifice de sortie supérieur 39' sont chacun ménagés à une distance D2 d'un petit coté respectif 37 qui est inférieure à un vingtième de la longueur L1.

Les orifices 38, 39, 39' étant globalement circulaires, lesdites distances correspondent à une longueur prise entre un centre du cercle et le côté correspondant.

## Revendications

1. Echangeur de chaleur (1) comprenant un collecteur d'entrée de fluide (5), un collecteur de sortie de fluide (9) et un faisceau principal (100) comprenant une pluralité de canaux (6) destinés à faire circuler un fluide (F), le faisceau principal (100) étant interposé entre le collecteur d'entrée de fluide (5) et le collecteur de sortie de fluide (9), **caractérisé en ce que** l'échangeur de chaleur (1) comprend un faisceau secondaire (200) comprenant une pluralité de canaux (6') destinés à faire circuler le fluide (F), le faisceau secondaire (200) étant interposé entre le collecteur d'entrée de fluide (5) et un collecteur secondaire (11).

2. Echangeur de chaleur (1) selon la revendication précédente, dans lequel le collecteur de sortie de fluide (9) est relié au collecteur secondaire (11) par un collecteur intermédiaire (16).

3. Echangeur de chaleur (1) selon la revendication précédente, dans lequel le collecteur intermédiaire (16) est disposé sur une face latérale (FI) de l'échangeur de chaleur (1).

4. Echangeur de chaleur (1) selon la revendication précédente, dans lequel le faisceau principal (100) et le faisceau secondaire (200) se situent de part et d'autre du collecteur d'entrée de fluide (5).

5. Echangeur de chaleur (1) selon la revendication précédente, dans lequel les canaux (6) du faisceau principal (100) sont disposés perpendiculairement au collecteur d'entrée de fluide (5) et au collecteur de sortie de fluide (9).

6. Echangeur de chaleur (1) selon la revendication précédente, dans lequel les canaux (6') du faisceau secondaire (200) sont disposés perpendiculairement au collecteur d'entrée de fluide (5) et au collecteur secondaire (11).

7. Echangeur de chaleur (1) selon la revendication précédente, dans lequel une entrée (3) est localisée à une extrémité latérale du collecteur d'entrée de fluide (5).

8. Echangeur de chaleur (1) selon la revendication précédente, dans lequel l'entrée (3) est localisée sur une face latérale (FI) de l'échangeur de chaleur (1).

9. Echangeur de chaleur (1) selon la revendication précédente, dans lequel une sortie (4) est localisée à une extrémité latérale du collecteur de sortie de fluide (9).

10. Echangeur de chaleur (1) selon la revendication précédente, dans lequel la sortie (4) est localisée sur une face latérale (FI) de l'échangeur de chaleur (1).

11. Echangeur de chaleur (1) selon la revendication précédente, dans lequel la circulation du fluide à l'intérieur du faisceau principal (100) et à l'intérieur du faisceau secondaire (200) se fait en I.
